# EUROPEAN PATENT APPLICATION

(11) **EP 2 523 083 A1**
(43) Date of publication of application: **14.11.2012**
(21) Application number: 11003977.3
(22) Date of filing: 13.05.2011
(51) Int. Cl.: G06F 3/048

(54) **System and method for operating a touchscreen and a processing unit**

(71) Applicant: Harman Becker Automotive Systems GmbH, 76307 Karlsbad (DE)
(72) Inventor: Keppler, Markus, 73312 Geislingen (DE)
(74) Representative: Koch Müller Patentanwaltsgesellschaft mbH

(57) **Abstract**

A system and a method for operating a touchscreen (100) and a processing unit (200),
- wherein a graphical user interface (500) has a first control element (A) and a second control element (B),
- the first control element (A) having a first touch area (A1) and a first visible element (A2) and the second control element (B) having a second touch area (B1) and a second visible element (B2),
- wherein a contact area (T) of a touch of a surface (190) of the touchscreen (100) is measured,
- wherein a distance (d) between the first touch area (A1) and the second touch area (B1) is determined,
- wherein the first control element (A) and/or the second control element (B) are modified when the distance (d) falls below the treshold (th) as well as the contact area (T) of the touch overlaps at least partially the first touch area (A1) and/or the second touch area (B1),
- wherein a touch change (T', 61, 71, 62, 72) is measured for assigning the touch change (T', 61, 71, 62, 72) to the modified first control element (A') or to the modified second control element (B'), and
- wherein an action (K1, K2) belonging to the assigned modified control element (A', B') is performed.

## Description

The present invention relates to a system and a method for operating a touchscreen and a processing unit.

A graphical user interface (GUI) is a component that allows the user of an electronic device - for example a smartphone - to interact via graphical symbols. If a touchscreen is used, the control elements of the graphical user interface can be controlled by touch. A control element can also be called touch control. A control element of this type is, for example, a hyperlink or the like. One or more control elements can form a widget. The control element has a touch area and an associated visible element, for example, in the form of a graphic (icon) or text. The touch area can also be called a touch target. The visible element can also be called a touch element or visual indicator. The visible element shows the user the area in which a touch is to occur to activate the control element. The touch area can but need not correspond to the dimensions of the visible element. In the case of too small visible elements, the touch area can generally be selected as larger, usually as a rectangle. The touch area is mostly invisible or less often depicted by dashed lines. For example, for a hyperlink a minimal bounding box around the text of the hyperlink is defined and around this minimal bounding box an advanced box is defined as the touch area, which is somewhat larger. If a touch occurs in the advanced box, the control element (in this case the hyperlink) is activated.

In order to show areas of the graphical user interface in magnified form, a screen magnifier is known, which makes it possible to show part of the graphical user interface in magnified form in a separate window in the area of the cursor. Input in the separate area is not possible. The graphical user interfaces also have predefined input aids, such as the so-called pop-ups or pull-down menus, which provide a separate display with one or more control elements.

In addition, zoomable graphical user interfaces (ZUI: Zoomable User Interface) are known. A zoomable user interface is a graphical user interface with the additional option of zooming the area to display the contents in magnified or reduced form.

Furthermore, web browsers are special computer programs for displaying web pages on the World Wide Web or in general documents and data. Apart from HTML pages, web browsers can display other different types of documents. Web browsers represent the graphical user interface for web applications. Web browsers also enable zooming in and out, so that the contents of the web browser are displayed in various sizes.

Depending on the resolution of the display and the zoom factor of the graphical user interface, the touch area of a finger can simultaneously overlap two adjacent control elements during an operation. As a rule, the highest control element (Z order) will perform the action associated with the control element. If this is not the desired one by the user, however, the user can manually change the zoom factor before the touch, so that the graphical user interface is increased in size overall.

In "UI Design and Interaction Guide for Windows Phone 7," Version 2.0, July 2010, components to the touch UI are shown. There are three components to the touch UI: A touch target is the area that is defined to accept touch input and is not visible to the user. A touch element is the visual indicator of the touch target that is visible to the user. A touch control is a touch target that is combined with a touch element that the user touches. Every touch control should be able to be comfortably touched with a finger. This involves manipulating size, spacing, location, and visuals to reduce the difficulty in acquiring a target through finger touch. Touch targets should not be smaller than 9 mm or 34 pixels square and provide at least 2 mm or 8 pixels between touchable controls. In exceptional cases, controls can be smaller but never more than 7 mm or 26 pixels square. The on-screen keyboard and hyperlinks in the browser are an exception, because they have differently sized hit targets. Touch targets should be larger than 9 mm when they require sequential or multiple inputs between adjacent touch controls.

The object of the invention is to provide a method for operating a touchscreen and a processing unit, in which closely spaced control elements on the graphical user interface can be operated as simply as possible.

Said object is achieved by a method with the features of independent claim 1. Advantageous refinements are the subject of dependent claims and included in the description.

Accordingly, a method for operating a touchscreen and a processing unit is provided.

In the method, a graphical user interface (GUI) is generated by the processing unit and displayed by means of the touchscreen. A graphical user interface of this type is, for example, a web browser.

The graphical user interface has a first control element and a second control element, which are also displayed by the touchscreen. The first and second control elements make input by the user possible via an area of the touchscreen. The method, particularly a program sequence in the processing unit, can be controlled by means of the first and second control elements.

The first control element is output with a first touch area and a first visible element. The first touch area is defined to accept touch input. The visible element is particularly an icon and/or text.

The second control element is output with a second touch area and a second visible element. The second touch area is also defined to accept touch input. Preferably, the second touch area and the first touch area and the first visible element and the second visible element are different.

In the method, a contact area of touching on a touchscreen surface is measured. The contact area can be measured differently depending on the employed technology. If, for example, a resistive touchscreen is used, the contact area is measured by determining a contact point on the surface by measuring two currents or voltages. A capacitive touchscreen panel is one which consists of an insulator such as glass, coated with a transparent conductor such as indium tin oxide. In mutual capacitive sensors, there is a capacitor at every intersection of each row and each column. A 16-by-14 array, for example, would have 224 independent capacitors. Several capacitors can be touched by touching the surface with a finger, so that the contact area of the touch is measured by measuring all changes in capacitance in the capacitor array.

In the method, a distance between the first touch area and the second touch area is determined. The distance is preferably defined from a first boundary of the first touch area to a second boundary of the second touch area. For example, the distance can be determined by counting a number of pixels between the first touch area and the second touch area.

In the method, the distance is compared with a threshold. The threshold is advantageously fixedly predefined. For example, the threshold is 2 mm. Alternatively, the threshold is calculated from a resolution of the touchscreen and/or a zoom factor.

In the method, the first control element and/or the second control element are modified, when the two conditions are met that the distance falls below the threshold and that the contact area of the touch overlaps at least partially the first touch area and/or the second touch area. Preferably, the modification of the first control element and/or of the second control element is visible to the user.

In the method, a touch change (e.g. a shift) is measured to enable assignment of the touch change to the modified first control element or to the modified second control element.

In the method, a first action is performed when the measured touch change is assigned to the modified first control element. In contrast, a second action is performed when the measured touch change is assigned to the modified second control element. The first or second action is, for example, a program start, for example, to play an audio file or the like.

The invention further has the object to improve as much as possible a system with a touchscreen and a processing unit.

Said object is achieved by the system with the features of independent claim 11. Advantageous refinements are the subject of dependent claims and included in the description.

Accordingly, a system with a touchscreen and a processing unit is provided. The processing unit is connected to the touchscreen via an interface. The processing unit is, for example, a microcontroller or CPU (central processing unit) or GPU (graphical processing unit).

The processing unit is configured to display a graphical user interface by means of the touchscreen, whereby the graphical user interface has a first control element and a second control element.

The first control element has a first touch area and a first visible element. In addition, the second control element has a second touch area and a second visible element. The first touch area and the second touch area are defined to accept touch input. Preferably the first touch area and the second touch area are not visible to the user.

The touchscreen is configured to measure a contact area. The contact area arises when a surface of the touchscreen is touched, for example, by a finger or stylus.

The processing unit is configured to determine a distance between the first touch area of the first control element and the second touch area of the second control element. In addition, the processing unit is configured to compare the previously determined distance with a threshold, for example, by means of a larger/smaller comparison.

The processing unit is configured to modify the first control element and/or the second control element, when both the distance falls below the threshold and the contact area of the touch overlaps at least partially, for example, in the case of a (square) point contact, the first touch area and/or the second touch area.

The processing unit is configured to measure a touch change to enable assignment of the touch change to the modified first control element or to the modified second control element.

The processing unit is configured in addition to perform a first action when the measured touch change is assigned to the modified first control element, and to perform a second action when the measured touch change is assigned to the modified second control element.

The refinements described hereafter refer both to the method for operating the touchscreen and the processing unit and to the system with the touchscreen and processing unit.

According to an advantageous embodiment, the distance between the first touch area and the second touch area is determined by counting a number of pixels between a first boundary of the first touch area and a (nearest) second boundary of the second touch area.

It is provided in advantageous refinements that the threshold is fixedly predefined or calculated based on a resolution of the touchscreen.

According to a preferred refinement, the first control element and/or the second control element are modified by moving apart the first touch area of the first control element and the second touch area of the second control element to produce a modified distance.

It is provided in another advantageous refinement that the first control element and/or the second control element are modified by enlarging the first touch area of the first control element and the second touch area of the second control element.

In another refinement variant, the first control element and/or the second control element are modified by highlighting the first visible element of the first control element or the second visible element of the second control element depending on the measured touch change. Preferably, to highlight the first or second control element a color of the first or second visible element is changed. Preferably, to highlight the first or second control element a border of the first or second visible element is changed. Preferably, in order to highlight the first or second control element a size of the first or second visible element is changed.

It is provided in another advantageous refinement that the first control element and/or the second control element are modified by displaying the first control element and/or the second control element in a pop-up. Preferably, the size of the pop-up is adjusted to the first control element and/or the second control element and optionally to other elements shown in the pop-up.

In an advantageous refinement variant, in order to measure the touch change a modified contact area is measured. The contact area may overlap at least partially the modified first control element or the modified second control element. Advantageously, the modified contact area is based on a new touch is measured. Alternatively, the modified contact area is based on a measured ending of the touch, therefore upon raising of the finger or the like.

According to an advantageous refinement, the touch change is measured as a directional change in the touch, to assign the directional change to one of the modified first control element or the modified second control element. To measure the directional change, for example, a time dependent course of a touch position can be measured.

It is provided in another advantageous refinement that to measure the touch change a touch gesture is measured to assign the touch gesture to the modified first control element or the modified second control element. A touch gesture, for example, is a so-called scrolling or a predefined motion shape, such as, for example, a check mark or the like.

The previously described refinement variants are especially advantageous both individually and in combination. In this regard, all refinement variants can be combined with one another. Some possible combinations are explained in the description of the exemplary embodiments shown in the figures. These possible combinations of the refinement variants, depicted therein, are not limiting, however.

The invention will be described in greater detail hereinafter by exemplary embodiments using graphic illustrations.

In the drawing are shown:
- FIG. 1: a schematic view of a touchscreen and a processing unit;
- FIG. 2: a schematic diagram of a control element of a graphical user interface;
- FIG. 3: a schematic diagram of a plurality of control elements of a graphical user interface;
- FIG. 4a: a schematic diagram of a plurality of control elements of a graphical user interface;
- FIG. 4b: a schematic diagram of modified control elements of a graphical user interface of a first exemplary embodiment;
- FIG. 5a: a schematic diagram of a plurality of control elements of a graphical user interface;
- FIG. 5b: a schematic diagram of modified control elements of a graphical user interface of a second exemplary embodiment;
- FIG. 6a: a schematic diagram of a plurality of control elements of a graphical user interface;
- FIG. 6b: a schematic diagram of modified control elements of a graphical user interface of a third exemplary embodiment;
- FIG. 7: a schematic diagram of a plurality of control elements of a graphical user interface;
- FIGS. 7a to 7d: a schematic diagram of modified control elements of a graphical user interface of a fourth exemplary embodiment;
- FIG. 8: a schematic diagram of a plurality of control elements of a graphical user interface;
- FIGS. 8a to 8d: a schematic diagram of modified control elements of a graphical user interface of a fifth exemplary embodiment;
- FIG. 9: a schematic diagram of a plurality of hyperlinks as control elements of a web browser as a graphical user interface;
- FIG. 10: a schematic diagram of hyperlinks enlarged in a pop-up as modified control elements in the web browser of a sixth exemplary embodiment;
- FIG. 11: a schematic diagram of hyperlinks enlarged in a pop-up as modified control elements in the web browser of a seventh exemplary embodiment;
- FIG. 12: a schematic diagram of enlarged hyperlinks as modified control elements in the modified web browser of an eighth exemplary embodiment;
- FIG. 13: a schematic diagram of control elements of the web browser of a ninth exemplary embodiment, which are enlarged in a pop-up;
- FIG. 14: a schematic diagram of control elements of the web browser of a tenth exemplary embodiment, which are enlarged in a pop-up and separated; and
- FIG. 15: a schematic diagram of a process flow.

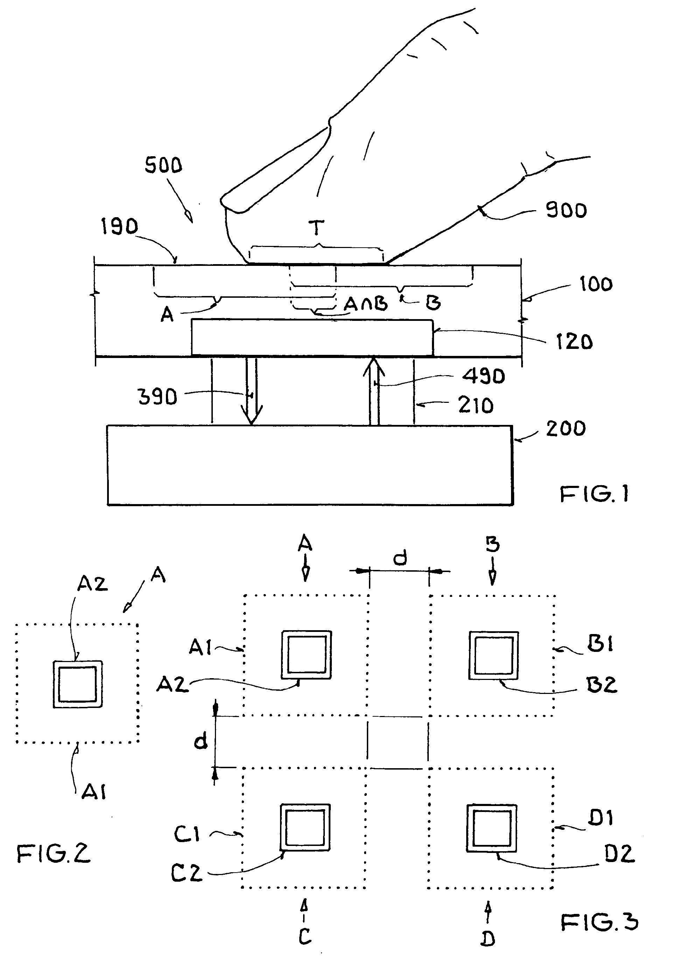

A system with a touchscreen 100 and with a processing unit 200 is shown schematically in FIG. 1. The touchscreen 100 is connected to the processing unit 200 via an interface 210. The processing unit 200, for example, is a CPU or a microcontroller. Processing unit 200 is configured to output data 490 via interface 210 to the touchscreen 100. The data 490 are displayed by the touchscreen 100 in the form of a graphical user interface 500.

Accordingly, processing unit 200 is configured to display a graphical user interface 500 by means of the touchscreen 100. In addition, the touchscreen 100 is configured to detect a touch, for example, by a finger 900. The touchscreen 100 is configured to measure a contact area T. To this end, for example, finger 900 touches a surface 190 of the touchscreen 100 with the contact area T, whereby the contact area T is acquired, for example, by capacitive measurements. By the measurement of the contact area T, for example, by means of a measuring circuit 120 of the touchscreen 100, generated measured data 390 are transmitted via interface 210 to the processing unit 200 for evaluation.

A first control element A and a second control element B in addition are shown schematically in section in FIG. 1. In the exemplary embodiment of FIG. 1, the first control element A and the second control element B overlap with the intersection A ^ B. Operation via surface 190 of the touchscreen 100 requires that control elements A, B are shown sufficiently large and are positioned at a sufficient distance to one another in the graphical user interface 500. Only in this case can the user clearly select control elements A, B with use of his finger 900. If the adjacent control elements A, B, overlap as shown in FIG. 1, then the user can no longer be certain that the desired action is initiated.

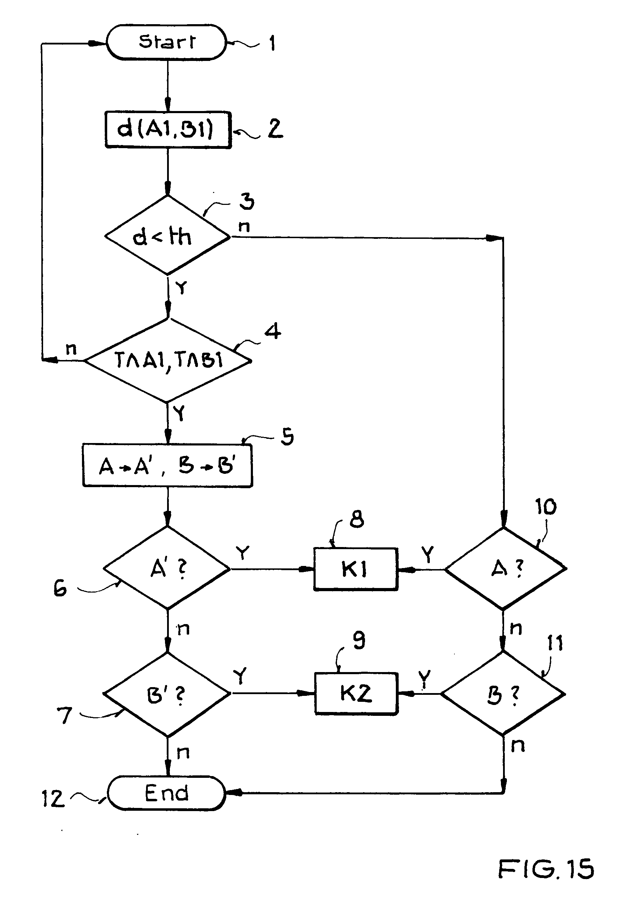

A schematic diagram is shown in FIG. 15 to illustrate a method in greater detail. In this exemplary embodiment, in step 1 a graphical user interface 500 is generated on a touchscreen 100 by means of a processing unit 200 and displayed by means of the touchscreen 100. Graphical user interface 500 has a first control element A and a second control element B. The first control element A has a first touch area A1 and a first visible element A2. The second control element B has a second touch area B1 and a second visible element B2.

In step 2, a distance d between the first touch area A1 and the second touch area B1 is determined. For example, to determine the distance d the number of pixels between the first touch area A1 and the second touch area B1 is determined by counting.

In the third step 3, the distance d is compared with a threshold th. If the distance d is smaller than the threshold th, step 4 follows; conversely, when the distance d is greater than the threshold th, step 10 follows.

In the step 4, a contact area T of a touch of a surface 190 on the touchscreen 100 is measured. In addition, it is determined in step 4 whether the contact area T of the touch overlaps the first touch area A1 and/or the second touch area B1 at least partially. In this regard, the process in step 1 is continued when the contact area T of the touch overlaps neither the first touch area A1 nor the second touch area B1 partially. In contrast, the method is continued in step 5 when the contact area T of the touch overlaps partially at least one of the first touch area A1 and the second touch area B1.

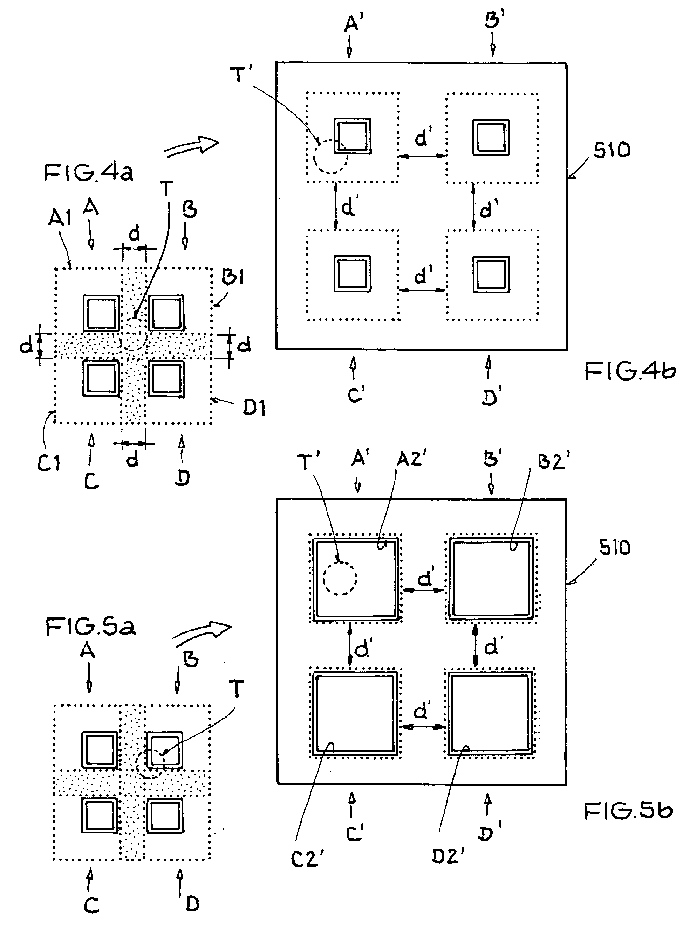

In the fifth step 5, the first control element A and/or the second control element B are modified. Several different exemplary embodiments for modifying the first control element A and/or second control element B are explained in greater detail in regard to FIGS. 4a through 14.

In the next steps 6 and 7, a touch change is measured to enable assignment by the user to the modified first control element A' or to the modified second control element B'. If the touch change can be assigned to the modified first control element A', a first action K1 is performed in step 8. If the touch change can be assigned to the modified second control element B', a second action K2 is performed in step 9. Otherwise, the process ends in step 12.

If the distance d is greater than the threshold th, the first touch area A1 and the second touch area B1 are sufficiently large, so that reliable assignment of the touch to one of the two control elements A or B is possible. In this case, after step 3 the assignment to the first control element A or the second control element B is determined in steps 10 and 11 and accordingly the action K1 or K2 is performed in step 8 or 9. The first/second action K1, K2 is, for example, the playback of music or a video or the running of a program, etc.

The advantage achieved by the previously described method is that the user can achieve in a very simple manner a clear input of the desired control element A or B. The user touches the touchscreen 100 and the system realizes that touch areas A1, B1 of the first control element A and of the second control element B overlap. Based on this realization, the system activates a special input mode by the change of the control elements A, B and makes it possible for the user by the touch change to select one of the modified control elements A', B' by a simple movement.

An especially simple control element A for graphical user interface 500 as a so-called widget is shown schematically in FIG. 2. The touch widget has a touch area A1 which can be tapped by the user. Widgets located next to one another are placed at an ergonomically favorable distance to one another in order to be able to be identified for clear input after a touch. Four widgets A, B, C, D as control elements with an ergonomically favorable distance d are shown schematically in FIG. 3. The first control element A has a first touch area A1 and a first visible element A2. Likewise, the second control element B has a second touch area B1 and a second visible element B2. This also applies to the third and fourth control element C, D each having a touch area C1, D1 and a visible element C2, D2.

Overlapping touch areas A1, B1, C1, D1 of the control elements A, B, C, D are shown schematically in FIG. 4a. In the shown case, due to overlapping, the distance d between the first touch area A1 and the second touch area B1 is negative. If the threshold th is a minimum distance of 9 pixels, for example, each negative value of the distance d falls below the threshold th.

From the contact area T of finger 900, it would be possible to assign the touching to several control elements A, B. Areas of multiple assignments are emphasized by the dotting in FIG. 4a. Thus far, in the case of a possible multiple assignment the highest element (Z order) will usually perform the associated action. This is often not desired by the user, however.

To solve this problem, a pop-up 510 of graphical user interface 500 is shown in FIG. 4b. Pop-up 510 has modified control elements A', B', C', D'. The modified control elements A', B', C', D' are modified in that they have a modified distance d' from one another. The modified control elements A', B', C', D' in pop-up 510 have been moved apart to have an ergonomically favorable modified distance d' to one another. Pop-up 510 in this case is generated automatically, when the contact area T of finger 900 overlaps at least one touch area A1, B1, C1, D1 of control elements A, B, C, D.

In the drawing, the control elements A, B, C, D in the pop-up 510 in FIG. 4b are not necessarily enlarged. The modification of the control elements A, B, C, D is sufficient, when ergonomically favorable distances d' are set.

A touch change T' is achieved in the exemplary embodiment of FIG. 4b by the user selecting a modified control element A' with a new touch within pop-up 510. It can be provided alternatively that the user leaves finger 900 on the surface 190 of the touchscreen 100, for example, moving it to the modified first control element A' in pop-up 510, and removing the contact in the contact area of the modified first control element A'. In this case, the removal of the contact is assigned by processing unit 200 to the modified first control element A'.

If, for example, the touchscreen 100 is installed in a motor vehicle, operation of small elements by the driver/passenger is only very limited or not even possible. It is desirable in this case that the control elements A, B, C, D have a particular size. This is not the case, however, specifically on web pages. An exemplary embodiment that moreover solves this problem is shown schematically in FIG. 5b. In FIG. 5a, areas of possible multiple assignments are also emphasized by dotting. In FIG. 5b, a pop-up 510 is again shown in that the modified control elements A', B', C', D' were separated from one another by the distance d'. In addition, the visible elements A2', B2', C2', D2' are enlarged to enable easy readability/perceptibility for the user in a motor vehicle also at a greater distance of the user. In contrast, the touch areas of the widgets have not been enlarged.

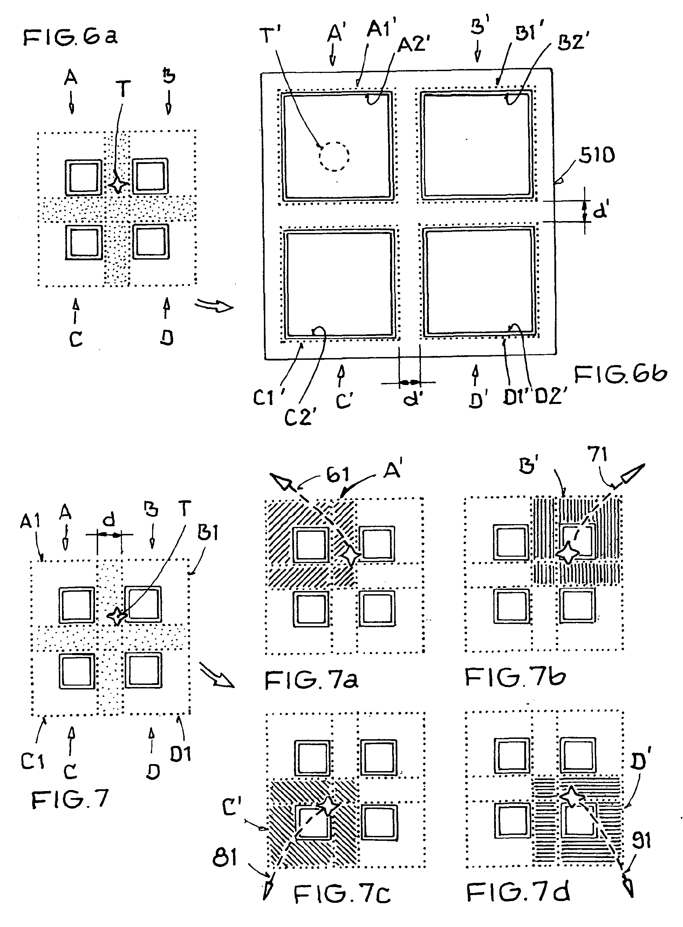

In a rapidly moving vehicle, further enlargement can be advantageous to make it easier for the user to operate the system and optionally not to distract a driver from traffic for an unnecessary long time. In this case, the contact area is coupled to the change in the size of the visible area. In this case, the contact area of the widget increases concurrently. This is shown in an exemplary embodiment in FIG. 6b. In FIG. 6a, areas of possible multiple assignments are also emphasized by dotting. In FIG. 6b, a pop-up 510 is again shown in that the modified control elements A', B', C', D' were separated from one another by the distance d'. In addition, the visible elements A2', B2', C2', D2' and the contact areas A1', B1', C1', D1' are enlarged significantly.

In FIG. 7, areas of possible multiple assignments are emphasized by dotting. On small screens, a sufficiently large display of the control elements cannot be assured in all cases. The control elements for small screens are therefore preferably changed in that the control elements are emphasized, for example, by means of a surrounding halo. The selection of the control element is made by going through the control elements to be emphasized in a predefined sequence. As an alternative to the emphasizing of the modified control elements A', B', C', D' in a pop-up 510, as shown in the previous figures, the modified control elements A', B', C', D' in the exemplary embodiment of FIGS. 7a, 7b, 7c, and 7d are modified for selection by highlighting and can be selected by an additional gesture 61, 71, 81, 91 as a touch change.

For highlighting, a visible area of a modified control element A', B', C', D' can be bordered, for example, by a corona, change its color, or, as shown by way of example in FIGS. 7a to 7d, have dashed lines. The highlighting and selection of the modified control element A', B', C', D' in the exemplary embodiment of FIGS. 7a, 7b, 7c, and 7d occur with use of a directional gesture 61, 71, 81, 91, in that the user moves finger 900 on the surface 190 in the direction of the desired modified control element A', B', C', or D'.

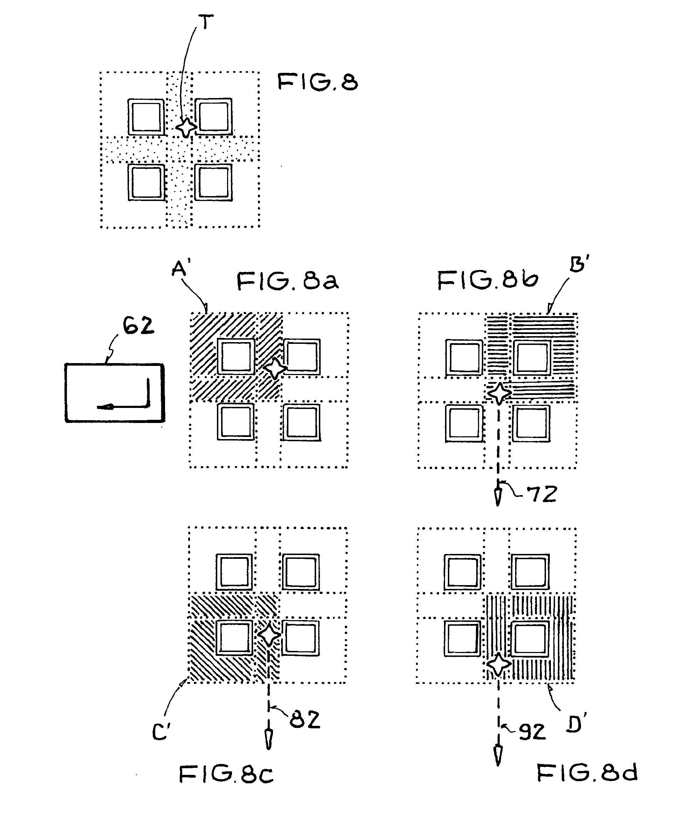

Another exemplary embodiment is shown schematically in FIGS. 8a to 8d. In FIG. 8, areas of possible multiple assignments are also emphasized by dotting. The modified control elements A', B', C', D' are changed by highlighting in the exemplary embodiment of FIGS. 8a, 8b, 8c, and 8d for selection and can be selected by an additional gesture 72, 82, 92 as a touch change and confirmed by means of an input field 62. The highlighting and selection of the modified control element A', B', C', D' in the exemplary embodiment of FIGS. 8b, 8c, and 8d occur by a scrolling movement 72, 82, 92, in that the user moves finger 900 up and down (scrolling) at any position on surface 190 of touchscreen 100. Finger 900 can be moved upward, for example, as on a scroll bar of a list, to select the previous control element, and moved downward to reach the end of the list. If the user encounters the boundaries of touchscreen 100, for example, scrolling continues automatically until the user again moves finger 900 from this boundary.

The entire touch surface 190 can be used for scrolling. If the entire touch surface 190 is used for scrolling, the user can position finger 900 as desired on the surface 190 and thus prevent covering the control elements of interest to him. For confirmation, for example, a confirmation area 62 is provided for this purpose, which must be touched explicitly once again by the user. To confirm the selected modified control element A', B', C', D', finger 900 can be raised and the associated action confirmed by means of another tap on the highlighted control element A', B', C', or D' or on the separate confirmation field 62. Confirmation field 62 is, for example, an OK/cancel pop-up or the like, which is shown directly next to the highlighted control element A', B', C', D'.

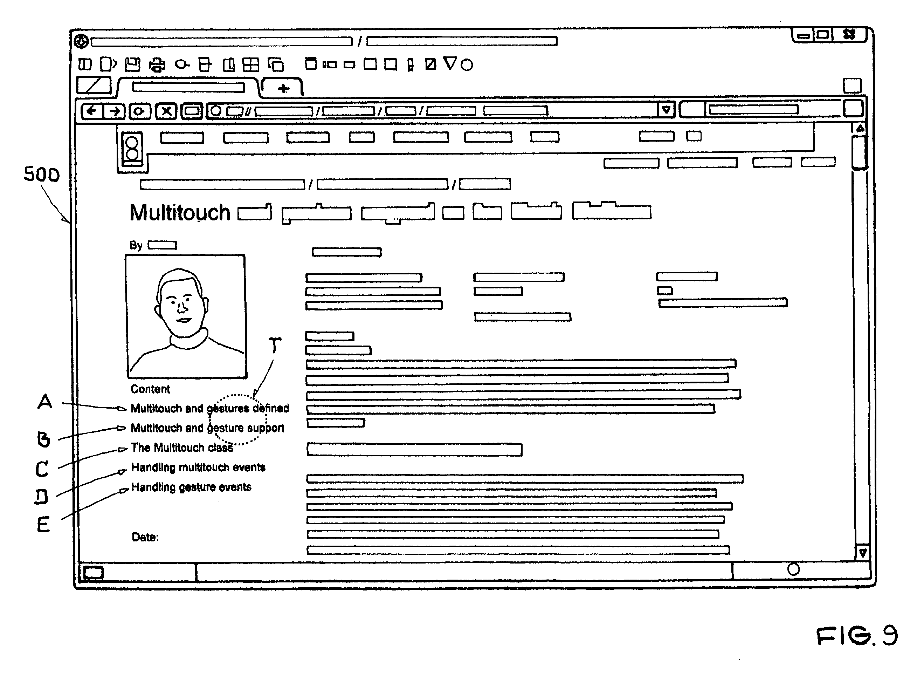

On the left on a web page, there are also control elements, which are difficult to select by means of a tap, when the web page is shown in its entire width or at a low resolution. A web browser 500 as a graphical user interface with a loaded web page is shown schematically in FIG. 9. Web browser 500 outputs five hyperlinks A, B, C, D, E as control elements. Furthermore, a contact area T is shown by means of a finger 900, which partially overlaps both first control element A and second control element B. Hyperlinks A, B, C, D, E in this case can be combined as a group of control elements, because they are arranged next to one another. In the exemplary embodiment of FIG. 9, the touch areas (not shown) of hyperlinks A, B, C, D, E can be adjacent or in any event be spaced apart only insufficiently or even overlap.

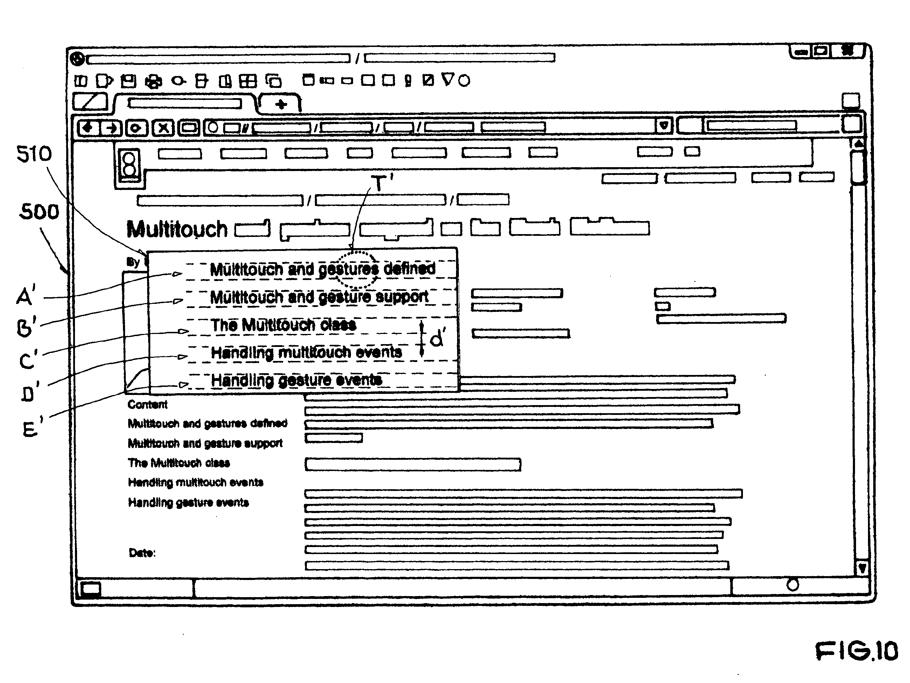

In FIG. 10, a pop-up 510 is shown as operational help, where pop-up 510 is displayed over the web page in web browser 500 and partially covers the web page. Pop-up 510 contains the modified control elements A', B', C', D', E' in an improved display form. For the modification, the hyperlinks are spaced apart by the distance d'. In addition, the hyperlinks are enlarged to achieve greater readability at the same time. In addition, a touch change T' in the form of a modified contact area T' is shown, in that the user taps on a modified control element A' within pop-up 510, whereby the contact area T is measured and assigned to the modified first control element A'. The input can be terminated in that, for example, the touch surface 190 is touched in an area outside pop-up 510. Alternatively, a time-out can also serve as a termination condition. The special input mode is ended after a time-out. The time counter for the time-out restarts with each performed action, so that the user can perform several actions one immediately after the other, without pop-up 510 being closed in between and reopened. This is advantageous, for instance, when operating a keyboard (not shown) on the graphical user interface 500.

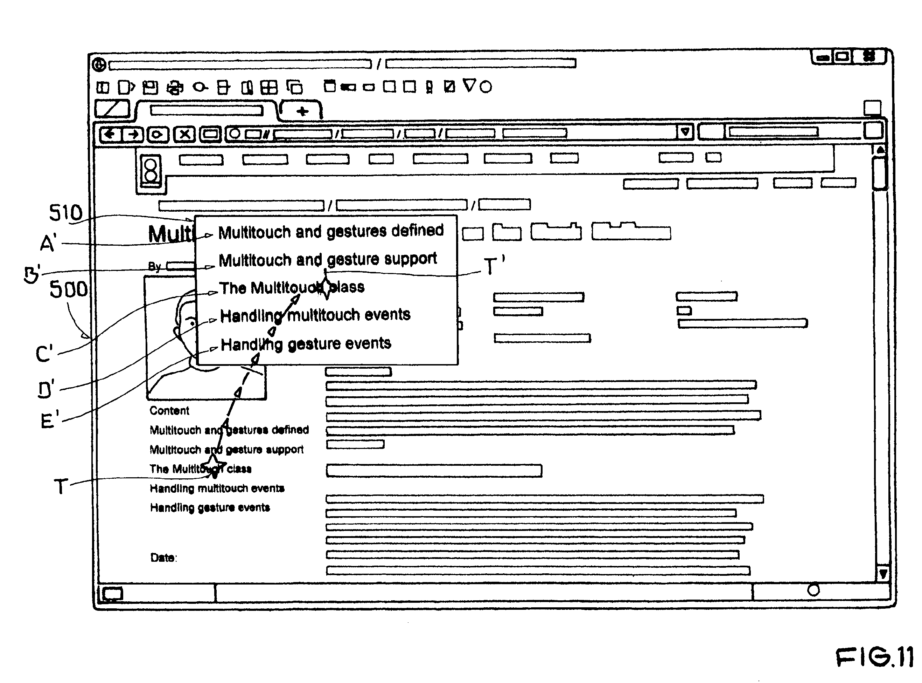

FIG. 11 shows another exemplary embodiment, in which the contact area T is also determined and a pop-up 510 is displayed. The display form in this case is selected so that the user can clearly select one of the modified control elements A', B', C', D', E', in that the user slides finger 900 to pop-up 510 and raises the finger only on the desired modified control element A', B', C', D', E'.

In the exemplary embodiments of FIGS. 10 and 11, in each case a pop-up 510 with the modified control elements A', B', C', D', E' is shown. The user moves his finger 900 to the desired modified control element A', B', C', D', E' and, for example, raises finger 900. The pop-up is then closed and the action K1, K2 (see FIG. 15) belonging to control element A', B', C', D', E' is performed. The user can also terminate the input by raising finger 900 outside pop-up 510. For ergonomic reasons, it is advantageous to also show the neighboring control elements to display a higher-level widget completely in the pop-up 510. If a widget consists, for example, of three control elements, then all three control elements are shown in the pop-up and not just the two whose distance d falls below the threshold th. Preferably, the operating states of the control elements A, B, C, D, E are also shown in pop-up 510 with the modified control elements A', B', C', D', E'. If not all of the necessary modified control elements A', B', C', D', E' can be shown in pop-up 510, then the content of pop-up 510 is adjusted according to the finger position within, for example, scrolling occurs accordingly.

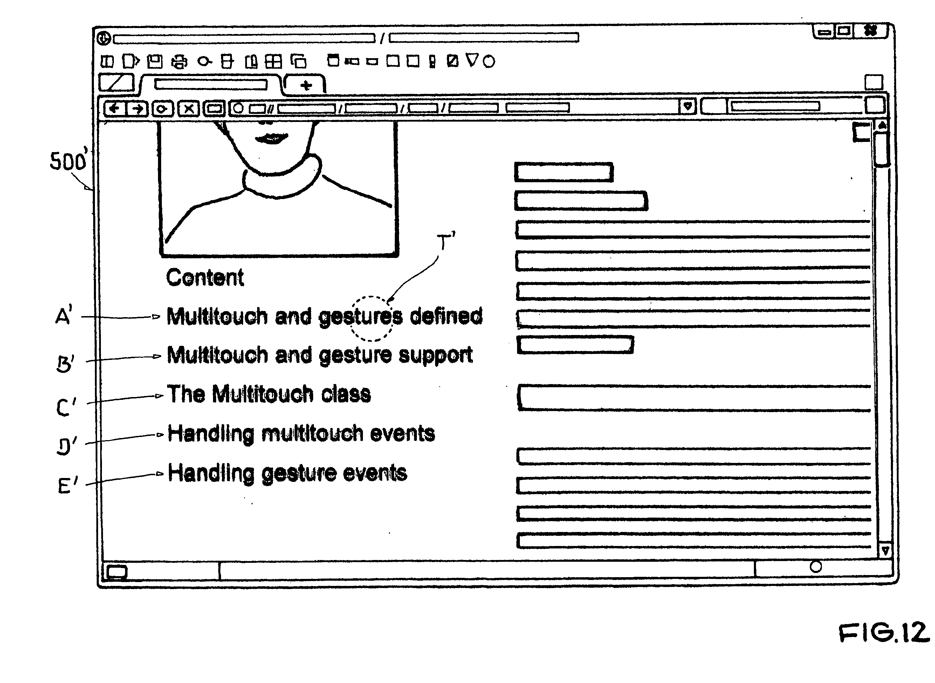

Another exemplary embodiment is shown schematically in FIG. 12. In the exemplary embodiment of FIG. 12, after the comparison of the distance d with the threshold th, the control elements are modified, in that the area with the modified control elements A', B', C', D', E' is automatically enlarged and in addition an area with the modified control elements A', B', C', D', E' is panned into a visible area of the modified graphical user interface 500'. This zooming and panning occurs automatically when the contact area T of the touch overlaps at least partially a touch area of at least one of the control elements A, B, C, D, E, as shown schematically in FIG. 9. Again a time-out termination of the enlargement can be used.

A repeated touch by finger 900 of the user can be measured as a touch change T'. In the case of FIG. 12, for example, the modified contact area T' is assigned to the first modified control element A' and a first action K1 is performed, which belongs to the first modified control element A'. The graphical user interface 500' modified by zooming in should not cause a corresponding enlargement of the touch areas A1, B1 of control elements A, B. With a proportional enlargement of the touch areas A1, B1 of the control elements A, B, the overlapping of touch areas A1, B1 would not be eliminated. The exemplary embodiment of FIG. 12 is especially advantageous particularly for small touchscreens 100, when a pop-up 510 would in any event fill the predominant portion of the graphical user interface 500.

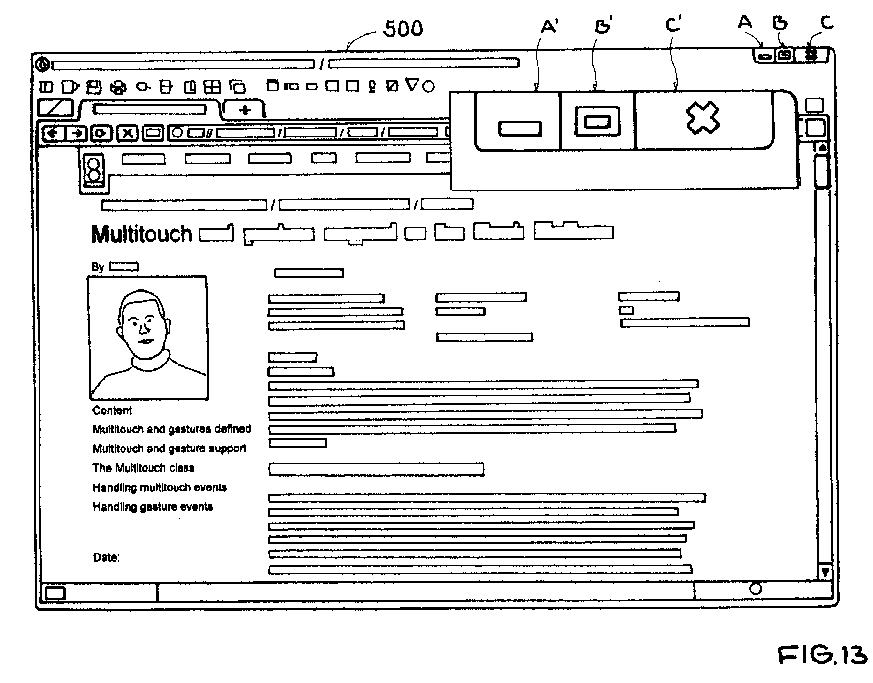

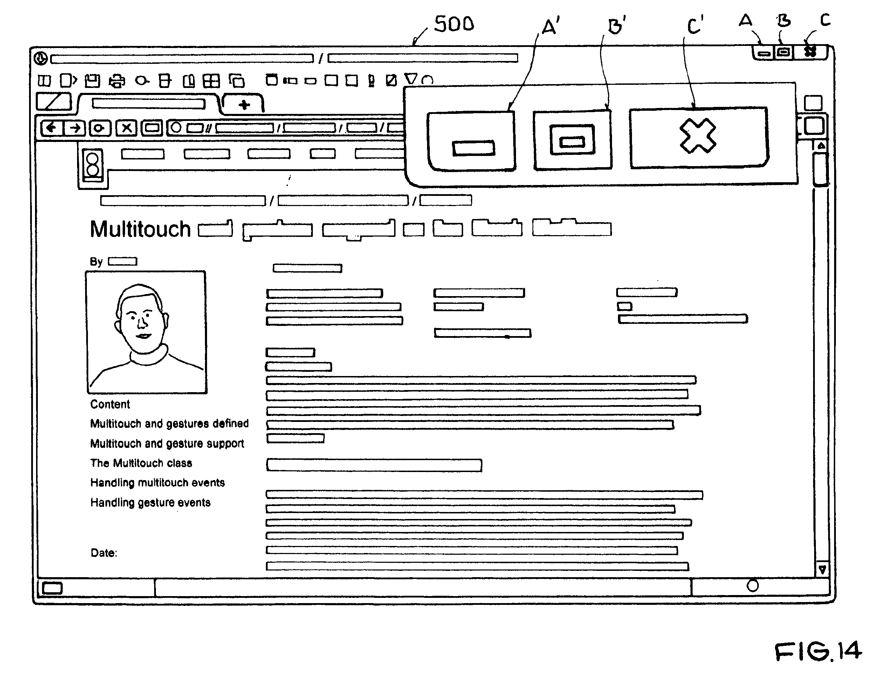

Alternatively to this display of the modified control elements A', B', C' in the same arrangement as the unmodified control elements A, B, C, as is shown, for example, in FIG. 13, it is possible to treat the modified control elements A', B', C' as independent units and to display them separated from one another. An exemplary embodiment with separated modified control elements A', B', C' is shown schematically in FIG. 14. As a result, the elements can be arranged with a suitable space requirement alternatively in the form of a list or matrix (not shown in FIG. 14). It is also advantageous to combine the control elements A, B, C in an edge area. For example, it is possible to combine the control elements A, B, C into a group and to display all control elements A, B, C of this group together in the same pop-up. Depending on the employed touch technology, edges may be short of measuring circuits and touch points may be hard or impossible to recognize. Combining control elements into a group and therefore enlarging the touch area of a control element next to the edge, enables the system to provide improved handling of touch targets. This can be achieved even if there are design limitations due to the employed touch technology.

The invention is not limited to the shown embodiment variants in FIGS. 1 through 15. For example, it is possible to use different graphical user interfaces or different control elements. The functionality can be used especially advantageously for a system in a motor vehicle.

### List of Reference Characters

- 100: touchscreen
- 190: surface
- 200: processing unit
- 210: interface
- 390, 490: data
- 500, 500': graphical user interface
- 510: pop-up
- 900: finger
- d, d': distance
- A, B, C, D, E: control element
- A', B', C', D', E': modified control element
- A1, B1, C1, D1: touch area
- A1', B1', C1', D1': modified touch area
- A2, B2, C2, D2: visible element
- A2', B2', C2', D2': modified visible element
- T: contact area
- T': modified contact area
- K1, K2: action
- 61, 71, 72, 81, 82, 91, 92: gesture, touch change
- 62: confirmation element

## Claims

1. A method for operating a touchscreen (100) and a processing unit (200),
- wherein a graphical user interface (500) is generated by the processing unit (200) and displayed by the touchscreen (100),
- wherein the graphical user interface (500) has a first control element (A) and a second control element (B),
- wherein the first control element (A) is output with a first touch area (A1) and a first visible element (A2),
- wherein the second control element (B) is output with a second touch area (B1) and a second visible element (B2), and
- wherein a contact area (T) of a touch of a surface (190) of the touchscreen (100) is measured,
**characterized in that**
- a distance (d) between the first touch area (A1) and the second touch area (B1) is determined,
- the distance (d) is compared with a threshold (th),
- the first control element (A) and/or the second control element (B) are modified
when
the distance (d) falls below the threshold (th)
as well as
the contact area (T) of the touch overlaps at least partially the first touch area (A1) and/or the second touch area (B1),
- a touch change (T', 61, 71, 62, 72) is measured for assigning the touch change (T', 61, 71, 62, 72) to the modified first control element (A') or to the modified second control element (B'),
- a first action (K1) is performed when the touch change (T', 61) is assigned to the modified first control element (A'), and
- a second action (K2) is performed when the touch change (71, 72) is assigned to the modified second control element (B').

2. The method according to claim 1,
- wherein the distance (d) between the first touch area (A1) and the second touch area (B1) is determined by counting a number of pixels between a first boundary of the first touch area (A1) and a second boundary of the second touch area (B1).

3. The method according to any one of the preceding claims,
- wherein the threshold (th) is fixedly predefined or is calculated from the resolution of the touchscreen (100).

4. The method according to any one of the preceding claims,
- wherein the first control element (A) and/or the second control element (B) are modified by moving apart the first touch area (A1) of the first control element (A) and the second touch area (B1) of the second control element (B) to create a modified distance (d').

5. The method according to any one of the preceding claims,
- wherein the first control element (A) and/or the second control element (B) are modified by enlarging the first touch area (A1) of the first control element (A) and the second touch area (B1) of the second control element (B).

6. The method according to any one of the preceding claims,
- wherein the first control element (A) and/or the second control element (B) are modified by highlighting the first visible element (A2) of the first control element (A) or the second visible element (B2) of the second control element (B) depending on the measured touch change (T, 61, 71, 62, 72).

7. The method according to any one of the preceding claims,
- wherein the first control element (A) and/or the second control element (B) are modified by displaying the first control element (A) and/or the second control element (B) in a pop-up (510).

8. The method according to any one of the preceding claims,
- wherein to measure the touch change (T') a modified contact area (T') is measured, which overlaps at least partially the modified first control element (A') or the modified second control element (B').

9. The method according to any one of the preceding claims,
- wherein to measure the touch change (61, 71) a directional change (61, 71) of the touch is measured to assign the directional change (61, 71) to the modified first control element (A') or the modified second control element (B').

10. The method according to any one of the preceding claims,
- wherein to measure the touch change (72) a touch gesture (72) is measured to assign the touch gesture (72) to the modified first control element (A') or the modified second control element (B').

11. A system,
- with a touchscreen (100) and
- with a processing unit (200) connected to the touchscreen (100),
- wherein the processing unit (100) is configured to display a graphical user interface (500) by means of the touchscreen (100),
- the graphical user interface (500) having a first control element (A) and a second control element (B),
- the first control element (A) having a first touch area (A1) and a first visible element (A2),
- the second control element (B) having a second touch area (B1) and a second visible element (B2), and
- wherein the touchscreen (100) is configured to measure a contact area (T) of a touch of a surface (190) of the touchscreen (100),
**characterized in that**
- the processing unit (200) is configured to determine a distance (d) between the first touch area (A1) and the second touch area (B1),
- the processing unit (200) is configured to compare the distance (d) with a threshold (th),
- the processing unit (200) is configured to modify the first control element (A) and/or the second control element (B) when the distance (d) falls below the threshold (th) as well as the contact area (T) of the touch overlaps at least partially the first touch area (A1) and/or the second touch area (B1),
- the processing unit (200) is configured to measure a touch change (T', 61, 71, 62, 72) for assigning the touch change (T', 61, 71, 62, 72) to the modified first control element (A') or to the modified second control element (B'),
- the processing unit (200) is configured to perform a first action (K1) when the touch change (T', 61, 71, 62, 72) is assigned to the modified first control element (A'), and
- the processing unit (200) is configured to perform a second action (K2) when the touch change (T', 61, 71, 62, 72) is assigned to the modified second control element (B').
